# EUROPEAN PATENT APPLICATION

(11) **EP 3 480 035 A1**
(43) Date of publication of application: **08.05.2019**
(21) Application number: 17820189.3
(22) Date of filing: 28.06.2017
(51) Int. Cl.: B60C 17/06

(54) **TIRE/WHEEL ASSEMBLY**

(30) Priority: 29.06.2016 JP 2016128373
(71) Applicant: The Yokohama Rubber Co., Ltd., Minato-ku Tokyo 105-8685 (JP)
(72) Inventor: KIMURA, Kazushi, Hiratsuka-shi Kanagawa 254-8601 (JP); SHIMADA, Genichirou, Hiratsuka-shi Kanagawa 254-8601 (JP); KAGEYAMA, Hirokazu, Hiratsuka-shi Kanagawa 254-8601 (JP)
(74) Representative: Dilg, Haeusler, Schindelmann Patentanwaltsgesellschaft mbH
(86) International application number: PCT/JP2017/023695
(87) International publication number: WO 2018/003835

(57) **Abstract**

A tire-wheel assembly with durability during run-flat traveling improved beyond conventional levels is provided. The tire-wheel assembly includes a run-flat support member disposed on a rim (1) within a cavity portion of a pneumatic tire (2) and including a support surface formed on an outer circumference; the run-flat support member being a bladder (4) comprising a foamed body (3) therein and being disposed in an annular manner around an outer circumference of the rim.

## Description

### Technical Field

The present invention relates to a tire-wheel assembly with improved durability during run-flat traveling.

### Background Art

Run-flat tires make traveling possible in emergency situations such as when a pneumatic tire is punctured or decreases in internal pressure. Generally, a run-flat tire has a structure that includes a reinforcing layer disposed in a sidewall portion that supports the tire tread portion when internal pressure decreases (side reinforced type). Unfortunately, compared to a normal tubeless tire, the tire has high rigidity as well as reduced drivability, reduced riding comfort, and worsened tire noise due to an increase in tire weight. Other proposed ways to enable emergency traveling include employing a structure with an inner flange portion provided on a rim body designed with a shape so that in emergency situations the inner rim flange portion supports the tread portion and installing an inner ring, a separate member from the tire, inside the tire so that the inner ring supports the tire when the tire is punctured or decreases in internal pressure.

Methods of installing an inner ring inside a tire to be supported by a rim include the methods described in Patent Documents 1 and 2 in which an annular body with a dish-shaped cross section is disposed. However, in these methods, in installing the inner ring on the rim, to prevent the tire from separating from the rim (rim separation) when internal pressure decreases, a tire bead portion must be installed strongly supporting a flange portion of the rim from the inside. In response to this, the proposed methods include structures including a plurality of separate support elements and having different materials. However, installing the inner ring inside the tire involves, after one tire bead is mounted on the rim, the inner ring being inserted through a small space between the other tire bead and the rim flange, installed in a predetermined position, and then the bead must be fit on the rim flange in a similar manner. This requires complex and specialized tools and technology.

Employing a member other than an annular body with a dish-shaped cross section has been proposed. Patent Documents 3 and 4 describe heightening an inner flange portion of a rim to prevent rim separation and installing a run-flat tire support body with a ring-shape in a rim portion between both inner flange portions.

However, with this method, a rim with a comparatively high inner flange requires that a wheel with a special shape be manufactured. Also, because the run-flat support member is preinstalled along the outer circumference of the rim, mounting the tire is extremely difficult and even impossible depending on the shape and size of the tire. In terms of structure and material, the run-flat support member in Patent Document 4 is a polyurethane foam elastic member. In Patent Documents 5 and 6, a base member made of a resin foamed body and a non-foaming resin outer layer portion or a composite structure including this reinforcing layer are described as answers to the problems of durability and the like. However, they do not solve the problem of installation in the tire. In Patent Documents 7, 8, and 9, the run-flat tire traveling support body is a support body with a configuration including an inner circumferential surface body and an outer circumferential surface body disposed around the rim outer circumferential surface of the wheel and a rib coupling these bodies in the radial direction. This configuration achieves the effects of weight reduction and enhancing riding comfort. However, the problem of mounting the tire on the wheel rim is not solved.

### Citation List

### Patent Literature

Patent Document 1: JP H10-297226 A
Patent Document 2: JP (translation of PCT application) 2001-519279 A
Patent Document 3: JP 2003-136924 A
Patent Document 4: JP 2004-291725 A
Patent Document 5: JP 2005-313736 A
Patent Document 6: JP 2005-313791 A
Patent Document 7: JP H06-305310 A
Patent Document 8: JP 2007-237904 A
Patent Document 9: JP 2008-296749 A

### Summary of Invention

### Technical Problem

An object of the present invention is to provide a traveling stability during run-flat traveling equal to or better than that of run-flat tires of the side reinforced type while maintain steering stability and riding comfort to levels similar to that of known tubeless tires.

### Solution to Problem

The present inventors, upon thorough examination, found that when mounting a tire on a wheel, installing an annular bladder on a rim outer circumference portion, injecting foamable liquid therein, and foaming the liquid results in almost no change in the easy of mounting tires on rims compared to typical tire wheel mounting, and enables a support body to be formed that supports the tire tread and bead portions inside the tire during run-flat traveling, and thus arrived at the invention of a tire-wheel assembly.

To achieve the object described above, a tire-wheel assembly of an embodiment of the present invention includes:
a run-flat support member disposed on a rim within a cavity portion of a pneumatic tire and including a support surface formed on an outer circumference;
the run-flat support member being a bladder including a foamed body therein and being disposed in an annular manner around an outer circumference of the rim.

### Advantageous Effects of Invention

In the tire-wheel assembly of an embodiment of the present invention, the run-flat support member includes the bladder that includes the foamed body therein, includes a support surface formed on the outer circumference, and is annularly disposed around the outer circumference of the rim inside the tire cavity portion. This improves the durability during run-flat traveling beyond conventional levels.

Preferably, a flexibility of the bladder is 5% or greater, and a density of the foamed body inside the bladder is from 0.05 to 0.3 g/cm³. Preferably, a compression strength of the foamed body at 10% strain is 20 N/cm² or greater, and a bending strength of the foamed body at 5% strain is 30 N/cm² or greater. By the compression strength and/or the bending strength of the foamed body being in this range, the durability during run-flat traveling can be further enhanced.

In the tire-wheel assembly, in a meridian direction cross section of the pneumatic tire, preferably a cross-sectional area of the bladder including the foamed body is equal to or greater than 1/4 of a cross-sectional area of the cavity portion of the pneumatic tire. Preferably, the bladder is in contact with at least a surface of the rim within the cavity portion of the pneumatic tire and an inner side of a bead portion of the pneumatic tire.

Preferably, a pressure inside the bladder is 1.5 kgf/cm² or greater. Preferably, a pressure inside the cavity portion of the pneumatic tire is 1.5 kgf/cm² or greater.

The bladder is a flexible tube-like bladder with an annular shape able to be disposed on a rim outer circumference portion, and the flexible tube-like bladder can be made from one selected from the group consisting of rubber, flexible plastic, flexible cloth, a net-like mesh structure, and a metal member or a composite thereof. Preferably, a member and/or an associated member of a portion of the flexible tube-like bladder is made from a reinforcing member such as a metal member. The reinforcing effect of the bladder suppress wear of the support body surface and improves durability. Additionally, preferably a plurality of the flexible tube-like bladders are disposed around the outer circumference of the rim forming an annular run-flat support member.

Preferably, the foamed body is a polyurethane foam made from a foamable compound with polyol, polyisocyanate, and water as main components. The foamable compound may further include at least one selected from a filler, fiber, an adhesion promoter, a surfactant, and an anti-aging agent.

Preferably, an air injection inlet for inflating the cavity portion of the pneumatic tire with air is provided. Preferably, an bladder air injection inlet for inflating the bladder with air is provided. Preferably, as well as the bladder including the foamed body, the associated member includes a reinforcing member such as a metal member.

### Brief Description of Drawings

- FIG. 1: is a cross-sectional view that schematically illustrates a tire-wheel assembly according to one embodiment of the present invention.
- FIG. 2: is a cross-sectional view that schematically illustrates a tire-wheel assembly according to another embodiment of the present invention.
- FIG. 3: is a cross-sectional view that schematically illustrates a tire-wheel assembly according to yet another embodiment of the present invention.
- FIG. 4: is a cross-sectional view that schematically illustrates a tire-wheel assembly according to yet another embodiment of the present invention.
- FIG. 5: is a cross-sectional view that schematically illustrates a tire-wheel assembly according to yet another embodiment of the present invention.

### Description of Embodiments

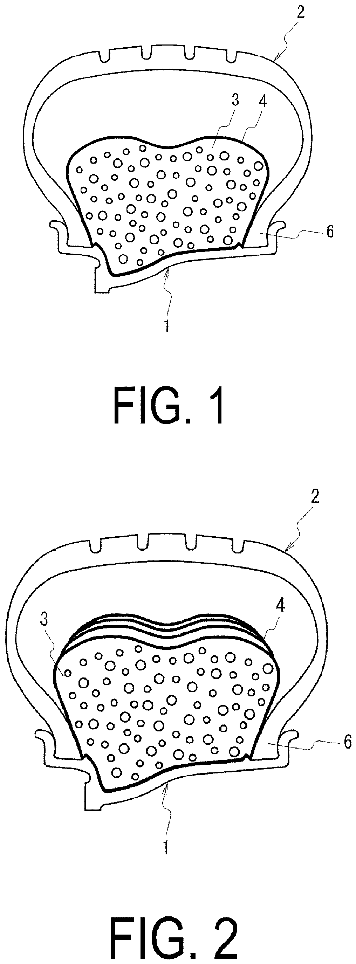

FIG. 1 is a cross-sectional view in a tire meridian direction that schematically illustrates a tire-wheel assembly according to one embodiment of the present invention. In the tire-wheel assembly in FIG. 1, a pneumatic tire 2 is mounted on a rim 1 of a wheel, a bladder 4 is disposed on the rim 1 within the cavity portion of the pneumatic tire 2, and a foamed body 3 is formed in the bladder 4 by injecting a liquid foamable compound. The bladder 4 including the foamed body 3 therein composes a run-flat support member. The outer circumference of the run-flat support member is formed as a support surface that supports the inner circumferential surface of the pneumatic tire during run-flat traveling. The run-flat support member including the bladder 4 that includes the foamed body 3 therein is annularly disposed around the outer circumference of the rim inside the tire cavity portion. This improves the durability during run-flat traveling beyond conventional levels. Additionally, compared to run-flat support members with an annular shell-shaped inner ring, rim mounting workability can be greatly enhanced and weight can be reduced.

The run-flat support member includes the bladder 4 that includes the foamed body 3 therein. This allows the air pressure of the pneumatic tire and the air pressure inside the bladder 4 to be independently regulated. As such, the durability during run-flat traveling can be further enhanced.

In an embodiment of the present invention, the density of the foamed body 3 is preferably from 0.05 to 0.30 g/cm³ and more preferably from 0.08 to 0.25 g/cm³. Setting the density of the foamed body in the range can further reduce the weight of the run-flat support member. In the present specification, the density of the foamed body can be measured in accordance with Japanese Industrial Standards (JIS) A 9511.

The compression strength of the foamed body 3 at 10% strain is preferably 8 N/cm² or greater, more preferably 20 N/cm² or greater, and even more preferably from 20 to 30 N/cm². By the compression strength of the foamed body being 8 N/cm² or greater, excellent load resistance and durability can be achieved. In the present specification, the compression strength of the foamed body can be measured in accordance with JIS A 9511 as compression strength at 10% strain.

The bending strength of the foamed body 3 at 5% strain is preferably 15 N/cm² or greater, more preferably 30 N/cm² or greater, and even more preferably from 30 to 40 N/cm². By the bending strength of the foamed body being 15 N/cm² or greater, excellent strain resistance can be achieved. In the present specification, the bending strength of the foamed body can be measured in accordance with JIS A 9511 as bending strength at 5% strain.

In the present invention, the material forming the foamed body is not particularly limited, and any material with the density and/or the compression strength and bending strength described above can be used. Examples of the material forming the foamed body include foamable resins of foamed polyurethane, polystyrene, polyolefin, phenol resin, polyvinyl chloride, urea resin, silicone, polyimide, melamine resin, or the like. Of these, polyurethane foam is preferable.

Polyurethane foam is a foamable resin made from a polymer containing an urethane bond (-NHCOO-) produced via condensation of a compound including an isocyanate group (-NCO) and a compound including a hydroxyl group (-OH). An example of the compound including an isocyanate group is a polyisocyanate compound including two or more isocyanate groups per molecule. Examples of the polyisocyanate compound include diisocyanate compounds of aromatic polyisocyanates such as tolylene diisocyanate (TDI), diphenylmethane diisocyanate (MDI), phenylene diisocyanate, xylylene diisocyanate (XDI), tetramethylxylylene diisocyanate (TMXDI), tolidine diisocyanate (TODI), naphthalene diisocyanate (NDI), and the like, aliphatic polyisocyanates such as hexamethylene diisocyanate (HDI), trimethylhexamethylene diisocyanate (TMHDI), lysine diisocyanate, norbornane diisocyanate (NBDI), and the like, and alicyclic polyisocyanates such as transcyclohexane-1,4-diisocyanate, isophorone diisocyanate (IPDI), H6XDI (hydrogenated XDI) H12MDI (hydrogenated MDI), H6TDI (hydrogenated TDI); polyisocyanate compounds such as polymethylene polyphenylene polyisocyanate; carbodiimide-modified polyisocyanates of these isocyanate compounds; isocyanurate-modified polyisocyanates of these isocyanate compounds; and urethane prepolymers obtained by reacting these isocyanate compounds with the above-described polyol compounds; and the like. These polyisocyanate compounds may be used alone or may be used in any combination of two or more types.

An example of the compound including a hydroxyl group is a polyol compound including two or more hydroxyl groups per molecule. Examples of the polyol compound include polyether polyols, polyester polyols, polycarbonate polyols, and mixtures including these polyol compounds and other polyols. Of these, polycarbonate polyols are preferable.

Examples of polyether polyol include polyols obtained by adding at least one polyhydric alcohol selected from the group consisting of ethylene glycol, diethylene glycol, propylene glycol, dipropylene glycol, glycerin, 1,1,1-trimethylolpropane, 1,2,5-hexanetriol, 1,3-butanediol, 1,4-butanediol, 4,4'-dihydroxyphenylpropane, 4,4'-dihydroxyphenylmethane, and pentaerythritol to at least one type selected from the group consisting of ethylene oxide, propylene oxide, butylene oxide, and styrene oxide; a polyoxytetramethylene oxide; and the like.

Examples of the polyester polyol include condensation polymers of one or two or more low molecular weight polyols such as ethylene glycol, propylene glycol, butanediol, pentanediol, hexanediol, cyclohexanedimethanol, glycerin, 1,1,1-trimethylolpropane and one or two or more low molecular weight carboxylic acid and/or oligomeric acid such as glutaric acid, adipic acid, pimelic acid, suberic acid, sebacic acid, terephthalic acid, isophthalic acid, and dimer acid; ring-opened polymers such as propiolactone and valerolactone; and the like.

The polycarbonate polyol is produced via a reaction such as a demethanolation condensation reaction of polyol and dimethyl carbonate; a dephenolation condensation reaction of polyol and diphenyl carbonate; a de-ethylene glycolation condensation reaction of polyol and ethylene carbonate; or the like. Examples of the polyol used in these reactions include saturated or unsaturated glycols such as 1,6-hexanediol, diethylene glycol, triethylene glycol, propylene glycol, 1,3-butanediol, 1,4-butanediol, neopentyl glycol, pentanediol, 3-methyl-1,5-pentanediol, octanediol, 1,4-butynediol, dipropylene glycol, tripropylene glycol, polytetramethylene ether glycol; alicyclic glycols such as 1,4-cyclohexane diglycol and 1,4-cyclohexane dimethanol; and the like.

Examples of other polyols include polymer polyols; polybutadiene polyols; hydrogenated polybutadiene polyols; acrylic polyols; low-molecular weight polyols such as ethylene glycol, diethylene glycol, propylene glycol, dipropylene glycol, butanediol, pentanediol, hexanediol, polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), polypropylene glycol stearylamine (for example, N,N-bis(2-methyl-2-hydroxyethyl)stearylamine), and tris(2-hydroxyethyl)isocyanurate; and the like.

In the present invention, the material forming the foamed body is preferably a polyurethane foam made from a foamable compound with polyol, polyisocyanate, and water as main components. More preferably, the polyurethane foam includes a foaming component with carbon dioxide gas as a main component, the carbon dioxide gas being produced from the reaction between the main components, a polyol, a polyisocyanate, and water. Even more preferably, the polyurethane foam is made from a foamable compound including a polycarbonate diol, a polymethylene polyphenylene polyisocyanate, and water as main components.

The foamable compound may further include at least one selected from a filler, fiber, an adhesion promoter, a surfactant, and an anti-aging agent. By including such ingredients, the durability during run-flat traveling can be further enhanced.

The flexibility of the bladder 4 is preferably 5% or greater and more preferably from 7 to 10%. The bladder 4 with a flexibility of 5% or greater can smoothly deform in accordance with impact with the road surface during run-flat traveling and the resultant deformation of the foamed body. Thus, durability is increased and pleasant travel can be achieved.

The bladder 4 is preferably a flexible tube-like bladder with an annular shape able to be disposed on the rim outer circumference portion. The flexible tube-like bladder is preferably made from one selected from the group consisting of rubber, flexible plastic, flexible cloth, a net-like mesh structure, and a metal member or a composite thereof. In other words, for example, the flexible tube-like bladder may be made from rubber, flexible plastic, flexible cloth, a net-like mesh structure, or a metal member and rubber coated to form a composite material, or may be a flexible plastic composite material including flexible cloth, a net-like mesh structure, or a metal member. A member and/or an associated member of a portion of the flexible tube-like bladder may include a reinforcing member such as a composite material of a metal member, engineering plastic, carbon fiber reinforced plastic, and the like. Of these, the reinforcing member is preferably a metal member. Additionally, the reinforcing member may be composed of a ring member such as an annular shell member, a plate-like spring member, a bellows-shaped member, or the like.

In a preferable embodiment of the present invention, the flexible tube-like bladder is a bellows-shaped structure, with the mountain portion and/or the valley portion made from metal wire. By the bladder 4 being composed of such a bellows-shaped structure, high strength and light weight can be achieved.

In a cross section in the meridian direction of the tire-wheel assembly of an embodiment of the present invention, the cross-sectional area of the bladder 4 containing the foamed body 3 is preferably 1/4 or greater of the cross-sectional area of the cavity portion of the pneumatic tire and more preferably from 1/2 to 3/4. Herein, the cross-sectional area of the bladder 4 containing the foamed body 3 is defined as the cross-sectional area of the foamed body 3 inside and the bladder 4. The cross-sectional area of the cavity portion of the pneumatic tire is defined as the area bordered by the inner circumference of the pneumatic tire and the outer circumference of the rim of the wheel. By the cross-sectional area of the bladder 4 containing the foamed body 3 being 1/4 or greater of the cross-sectional area of the cavity portion of the pneumatic tire, the durability of the tire can be further enhanced.

In the embodiment of FIG. 1, the bladder 4 containing the foamed body 3 is in contact with the entire surface of the rim 1 of the wheel within the cavity portion of the tire and in contact with the entire inner surface of a bead portion 6 of the pneumatic tire 2. The bladder 4 containing the foamed body 3 being in contact and covering the rim 1 and the bead portion 6 enables stable traveling.

The tire-wheel assembly of the embodiment illustrated in FIG. 2 employs a bellows-shaped structure for the flexible tube-like bladder 4. The bladder 4 with a bellows-shaped structure includes the foamed body 3 therein and is in contact with the surface of the rim 1 of the wheel within the cavity portion of the tire and in contact with the inner surface of the bead portion 6 of the pneumatic tire 2. The mountain portion of the bellows-shaped structure is made from metal wire, allowing for high strength and light weight to be achieved.

With the run-flat support member including the bladder 4 that includes the foamed body 3, the bladder 4 with a predetermined annular shape is prepared, and the foamed body 3 inside the bladder 4 is formed via foaming. Then, the obtained bladder 4 is mounted inside the tire-wheel assembly on the rim. Preferably, only the bladder 4 is mounted when the tire-wheel assembly is mounted on the rim, and thereafter, the foamable compound is injected inside the bladder 4 to form the foamed body 3 via foaming. The run-flat support member can be easily disposed inside the tire-wheel assembly with either method of manufacturing the run-flat support member.

The tire-wheel assembly of an embodiment of the present invention includes an air injection inlet for inflating the cavity portion of the pneumatic tire 2 with air, and via this air injection inlet, the air pressure inside the cavity portion of the pneumatic tire 2 can be adjusted.

The pressure inside the cavity portion of the pneumatic tire is preferably 1.5 kgf/cm² or greater and more preferably from 2.0 to 2.5 kgf/cm². By the pressure inside the cavity portion of the pneumatic tire 2 being 1.5 kgf/cm² or greater, braking and driving performance can be ensured and good ride comfort and low rolling resistance can be achieved.

An annular bladder air injection inlet can be provided inside the run-flat support member for inflating the bladder 4 including the foamed body 3 with air. Providing the annular bladder air injection inlet allows the air pressure inside the bladder 4 and the air pressure of the cavity portion of the pneumatic tire 2 to be independently adjusted.

The pressure inside the bladder 4 is preferably 1.5 kgf/cm² or greater and more preferably from 2.0 to 2.5 kgf/cm². By the pressure inside the bladder 4 being 1.5 kgf/cm² or greater, performance similar to a normal tire filled with air can be achieved.

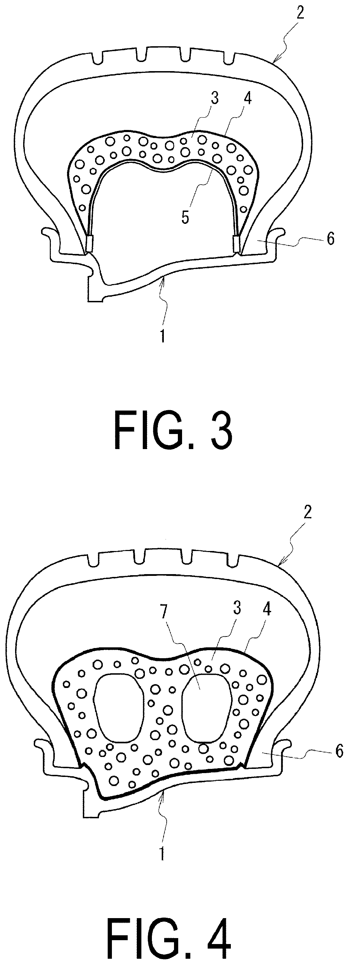

FIG. 3 is a cross-sectional view of a tire-wheel assembly of another embodiment. The run-flat support member includes an annular shell 5 as well as the bladder 4 containing the foamed body 3. The bladder 4 containing the foamed body 3 is disposed outward of the annular shell 5 in the tire radial direction. The annular shell 5 includes an annular support portion located inward in the tire lateral direction that protrude outward in the tire radial direction and extends towards the bead portions 6 with its outer end portions in the tire lateral direction opening out. The annular shell 5 is different from those described in Patent Documents 1 and 2 that function independently as run-flat support members in that the annular shell 5 is exclusively an auxiliary member for positioning the bladder 4 containing the foamed body 3 at a position close to the tire tread portion. With the run-flat support member having a composite structure including the bladder 4 containing the foamed body 3 and the annular shell 5, a certain strength can be maintained and weight can be reduced.

FIG. 4 is a cross-sectional view of a tire-wheel assembly of another embodiment. In this embodiment, the foamed body 3 inside the bladder 4 has a hollow structure. The hollow structure includes at least one air hole 7 and preferably includes two or more. By the foamed body 3 with a hollow structure being disposed inside the bladder 4, the weight of the run-flat support member can be further reduced. Note that the air hole 7 is preferably an annular space continuous in the tire circumferential direction. The air hole 7 has a larger cross section than the bubbles in the constituent material of the foamed body 3. For example, in terms of diameter, the diameter of the air hole 7 in a cross section is preferably equal to or greater than 10 times the diameter of the bubbles of the foamed body 3 and more preferably from 20 to 1000 times.

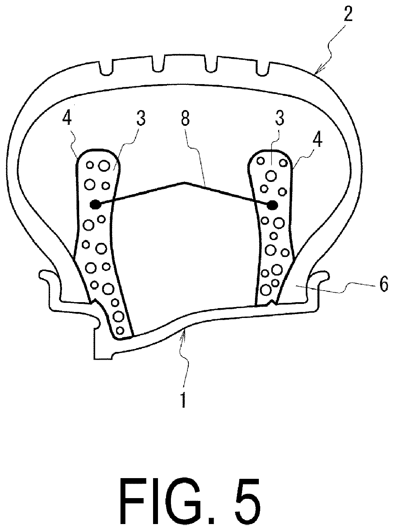

FIG. 5 is a cross-sectional view of a tire-wheel assembly of another embodiment. In this embodiment, at least two of the bladder 4 containing the foamed body 3 are disposed on the outer circumference of the rim separated in the tire lateral direction, and the plurality of annular bladders 4 containing the foamed body 3 are coupled via an elastic member 8. Preferably, a plurality of the elastic members 8 are disposed at intervals in the circumferential direction of the bladders 4 containing the foamed body 3. By disposing a plurality of the annular bladders 4 containing the foamed body 3 with a narrow width in this manner, the weight of the run-flat support member can be further reduced. Additionally, by the annular bladders 4 containing the foamed body 3 being coupled via the elastic member 8, the bladders 4 containing the foamed body 3 can be prevented from collapsing and the durability during run-flat traveling can be further increased.

The present invention is further explained below by examples. However, the scope of the present invention is not limited to these examples.

### Examples

### Examples 1 to 3

Foamable compounds including the compounds "foamed bodies 1 to 3" indicated in Table 1 were weighted out, and then agitated for 1 minute at room temperature (25°C). They were then immediately injected into a mold of a predetermined shape. After foaming for approximately 30 minutes, the foaming phenomenon ceased. The reaction products were left to stand for 24 hours. When the foaming and the polymerization reaction was complete, foamed bodies 1 to 3 were obtained.

The obtained foamed bodies 1 to 3 were measured for compression strength and bending strength using the measurement methods described below.

### Compression Strength

Sample pieces for measurement were prepared from the obtained foamed bodies in accordance with JIS A9511. Using the sample pieces for measurement, the compression strength at 10% strain was measured in accordance with JIS A9511 by conducting a compression test with a deformation speed of 5 mm/min at a temperature of 23°C.

### Bending Strength

Sample pieces for measurement were prepared from the obtained foamed bodies in accordance with JIS A9511. Using the sample pieces for measurement, the bending strength at 5% strain was measured in accordance with JIS A9511 by conducting a bending test with a deformation speed of 20 mm/min at a temperature of 23°C.

Bladders having the cross-sectional shape of the bladder 4 illustrated in FIG. 1 were mounted in advance inside a tire-wheel assembly with a tire size of 185/65R15, i.e., along the rim inside the tire. Foamable compounds including the compounds "foamed bodies 1 to 3" indicated in Table 1 were weighted out, and then agitated for 1 minute at room temperature (25°C). They were immediately injected inside the bladders 4 then left to stand for 24 hours and 30 minutes. When the foaming and the polymerization reaction was complete, tire-wheel assemblies were obtained. A flexible tube-like bladder made from a rubber-coated net-like mesh structure was used for the bladder 4. The cross-sectional area of the bladder including the foamed body was 2/3 of the cross-sectional area of the cavity portion of the pneumatic tire. A run-flat traveling test for the obtained tire-wheel assemblies and weighting of the tire-wheel assemblies were conducted by the methods described below.

### Run-flat Traveling Test

The test tires were mounted on wheels having a rim size of 18x7.5 J, mounted on a test vehicle, and inflated to an air pressure of 230 kPa, except for the right side drive axle tire whose valve core was removed, and the vehicle was run on an asphalt road surface test course at an average speed of 80 km/h. Running was continued until a driver felt vibration caused by the breakdown of the tire and the running distance was measured. Such measurement was performed by three test drivers, and the average running distance was found. Evaluation results are expressed as index values with the value of the tire of the Conventional Example being defined as 100. Larger index values indicate superior run-flat durability. Note that for the tire of the Conventional Example, a run-flat tire including a side reinforcing resin body as the support body was used.

### Weight of Tire-wheel Assembly

The weight of the tire-wheel assemblies were measured with the test tires being mounted on wheels having a rim size of 18x7.5 J and adjusted to an air pressure of 230 kPa. The obtained results are expressed as index values with the value of the Conventional Example being defined as 100. Smaller index values indicate lower tire-wheel assembly weight and, thus, superior results. Note that the tire of the Conventional Example was setup in the same manner.

### Example 4

A bladder having the cross-sectional shape of the bladder 4 illustrated in FIG. 2 was mounted in advance in a tire-wheel assembly. A foamable compound including the composition of foamed body 2 indicated in Table 1 was injected in the bladder 4 and underwent foaming. The foamable compound was left to stand for 24 hours and 30 minutes to complete the foaming and the polymerization reaction. A run-flat traveling test for the obtained tire-wheel assembly and weighting were conducted by the methods described above.

**[Table 1]**

| | | Conventional Example | Example 1 | Example 2 | Example 3 | Example 4 |
|---|---|---|---|---|---|---|
| Shape of run-flat support member | | | FIG. 1 | FIG. 1 | FIG. 1 | FIG. 2 |
| Composition of foamed body | | | Foamed body 1 | Foamed body 2 | Foamed body 3 | Foamed body 2 |
| Polyol compound | Parts by mass | | 100 | 100 | 100 | 100 |
| Amine compound | Parts by mass | | 0.4 | 0.4 | 0.4 | 0.4 |
| Catalyst | Parts by mass | | 0.5 | 0.5 | 0.5 | 0.5 |
| Foam stabilizer | Parts by mass | | 1.2 | 1.2 | 1.2 | 1.2 |
| Isocyanate compound 1 | Parts by mass | | 20 | 40 | 60 | 40 |
| Isocyanate compound 2 | Parts by mass | | 20 | 40 | 60 | 40 |
| Water | Parts by mass | | 5 | 10 | 10 | 10 |
| Density | g/cm³ | | 0.18 | 0.15 | 0.14 | 0.15 |
| Compression strength | N/cm² | | 34 | 51 | 50 | 51 |
| Bending strength | N/cm² | | 67 | 83 | 82 | 83 |
| Durability during run-flat traveling | Index value | 100 | 103 | 106 | 101 | 103 |
| Weight of tire-wheel assembly | Index value | 100 | 95 | 98 | 95 | 90 |

The types of raw materials used are shown in Table 1 below.
- Polyol compound: polycarbonate diol, available from Asahi Kasei Corporation T5651
- Amine compound: 1,4-diazabicyclo[2.2.2]octane, available from Tokyo Chemical Industry Co., Ltd.
- Catalyst: tin octylate, available from Nitto Kasei Co., Ltd. Neostann U-28
- Foam stabilizer: Silicone oil, available from Dow Corning Toray FZ3703
- Isocyanate compound 1: Polymethylene polyphenyl polyisocyanate, NCO group content 31%, available from Sumika Bayer Urethane Co., Ltd. Sumidur 44V10
- Isocyanate compound 2: Polymethylene polyphenyl polyisocyanate, NCO group content 31%, available from Sumika Bayer Urethane Co., Ltd. Sumidur 44V20

The tire-wheel assemblies of Examples 1 to 4 exhibited superior durability during run-flat traveling. Additionally, the foamed bodies 1 to 3 with a low density of around 0.2 g/cm³ gave the characteristics of light weight and high durability compared to the Conventional Example.

### Reference Signs List

1 Rim
2 Pneumatic tire
3 Foamed body
4 Bladder
5 Annular shell
6 Bead portion
7 Air hole
8 Elastic member

## Claims

1. A tire-wheel assembly, comprising:
a run-flat support member disposed on a rim within a cavity portion of a pneumatic tire and comprising a support surface formed on an outer circumference;
the run-flat support member being a bladder comprising a foamed body therein and being disposed in an annular manner around an outer circumference of the rim.

2. The tire-wheel assembly according to claim 1, wherein
a flexibility of the bladder is 5% or greater, and
a density of the foamed body inside the bladder is from 0.05 to 0.3 g/cm³.

3. The tire-wheel assembly according to claim 1 or 2, wherein
a compression strength of the foamed body at 10% strain is 20 N/cm² or greater, and
a bending strength of the foamed body at 5% strain is 30 N/cm² or greater.

4. The tire-wheel assembly according to any one of claims 1 to 3, wherein in a meridian direction cross section of the pneumatic tire, a cross-sectional area of the bladder comprising the foamed body is equal to or greater than 1/4 of a cross-sectional area of the cavity portion of the pneumatic tire.

5. The tire-wheel assembly according to any one of claims 1 to 4, wherein the bladder is in contact with at least a surface of the rim within the cavity portion of the pneumatic tire and an inner side of a bead portion of the pneumatic tire.

6. The tire-wheel assembly according to any of claims 1 to 5, wherein
a pressure inside the bladder is 1.5 kgf/cm² or greater.

7. The tire-wheel assembly according to any of claims 1 to 6, wherein
a pressure inside the cavity portion of the pneumatic tire is 1.5 kgf/cm² or greater.

8. The tire-wheel assembly according to any one of claims 1 to 7, wherein the bladder is a flexible tube-like bladder with an annular shape able to be disposed on a rim outer circumference portion, and
the flexible tube-like bladder is made from one selected from the group consisting of rubber, flexible plastic, flexible cloth, a net-like mesh structure, and a metal member or a composite thereof.

9. The tire-wheel assembly according to claim 8, wherein
a member and/or an associated member of a portion of the flexible tube-like bladder is made from a reinforcing member such as a metal member.

10. The tire-wheel assembly according to claim 8 or 9, wherein
two or more of the flexible tube-like bladders are disposed around the outer circumference of the rim forming an annular run-flat support member.

11. The tire-wheel assembly according to any one of claims 1 to 10,
wherein
the foamed body is a polyurethane foam made from a foamable compound with polyol, polyisocyanate, and water as main components.

12. The tire-wheel assembly according to claim 11, wherein
the foamable compound further comprises at least one selected from a filler, fiber, an adhesion promoter, a surfactant, and an anti-aging agent.

13. The tire-wheel assembly according to any one of claims 1 to 12, further comprising
an air injection inlet for inflating the cavity portion of the pneumatic tire with air.

14. The tire-wheel assembly according to any one of claims 1 to 13, further comprising
annular bladder air injection inlet for inflating the bladder with air.

15. The tire-wheel assembly according to any one of claims 9 to 14,
wherein,
as well as the flexible tube-like bladder, the associated member comprises a reinforcing member such as a metal member.
